(19) Europäisches Patentamt
European Patent Office
Office européen des brevets

(11) **EP 4 120 096 A1**

(12) **EUROPEAN PATENT APPLICATION**
published in accordance with Art. 153(4) EPC

(43) Date of publication:
**18.01.2023 Bulletin 2023/03**

(51) International Patent Classification (IPC):
***G06F 16/22*** *(2019.01)*

(21) Application number: **21868353.0**

(86) International application number:
**PCT/CN2021/112005**

(22) Date of filing: **11.08.2021**

(87) International publication number:
**WO 2022/057525 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.09.2020 CN 202010967446**

(71) Applicant: **Tencent Technology (Shenzhen)
Company Limited
Shenzhen, Guangdong 518057 (CN)**

(72) Inventor: **YUAN, Liangsheng
Shenzhen, Guangdong 518057 (CN)**

(74) Representative: **Eisenführ Speiser
Patentanwälte Rechtsanwälte PartGmbB
Postfach 31 02 60
80102 München (DE)**

(54) **METHOD AND DEVICE FOR DATA RETRIEVAL, ELECTRONIC DEVICE, AND STORAGE MEDIUM**

(57)    A method and device for data retrieval, an electronic device, and a storage medium. A target data type pertinent to target audio and video behavior data of an audio and video application for which retrieval is requested by a target user is acquired (the target audio and video behavior data is past audio and video behavior data currently not stored in a database and has been deleted from the database), target audio and video behavior data can be searched for, on the basis of the target data type, in a blockchain system used for storing operational data (the operational data comprising first operational data expressing audio and video behavior data of the audio and video application) of the audio and video application. On such basis, not only can the target audio and video behavior data being found be stored in the database, but the target audio and video behavior data being found can also be returned to the audio and video application to be viewed by the target user, thus implementing the retrieval of the audio and video behavior data that has been deleted from the database.

Acquire a target data category to which target audio and video behavior data belongs, the target audio and video behavior data being data that a target user requests to recover and generated during use of an audio and video application by the target user, and the target audio and video behavior data being historical audio and video behavior data that has been deleted from a database — S701

Search a blockchain system for the target audio and video behavior data according to the target data category, the blockchain system being configured to store operation data generated by the audio and video application, the operation data including first operation data representing audio and video behavior data — S702

Store the target audio and video behavior data in the database — S703

Return the target audio and video behavior data to the target user — S704

Figure 7

**Description**

RELATED APPLICATION

This application claims priority to Chinese Patent Application No. 2020109674467, entitled "METHOD AND APPARATUS FOR RECOVERING DATA, ELECTRONIC DEVICE, AND STORAGE MEDIUM" and filed with the China National Intellectual Property Administration on September 15, 2020, which is incorporated herein by reference in its entirety.

FIELD OF THE TECHNOLOGY

The present disclosure relates to the technical field of computer applications, and in particular, to data recovery technology.

BACKGROUND OF THE DISCLOSURE

Rapid development of communication technology engenders an increasing demand on more functional terminals such as mobile phones and computers, and breeds more and more terminal-based applications. Especially, audio/video applications have gradually become an indispensable tool in people's daily life. Audio-video operating data would be created when a user performs an operation that triggers an audio or a video in an audio/video application.
In conventional technology, an audio/video server usually stores the audio-video operating data of the user in a database. When the user requests retrieving history audio-video operating data via the audio/video application, the audio/video server searches the database for the data directly and returns the data to the audio/video application, such that the user can perform subsequent operations on the obtained history audio-video operating data.
When the user requests deleting the history audio-video operating data via the audio/video application, the audio/video server deletes the history audio-video operating data directly and completely from the database. In such case, the user is not capable to request recovering the deleted history audio-video operating data via the audio/video application, which degrades user's experience on using the audio/video application to some extent.

SUMMARY

In view of the above, the present disclosure provides a method and an apparatus for recovering data, an electronic device, and a storage medium, which can implement recovery of history audio-video operating data that has been deleted. Technical solutions are described as follows.
In a first aspect, a method for recovering data is provided according to an embodiment of the present disclosure. The method includes: acquiring a target category to which target audio-video operating data belongs, where the target audio-video operating data is data of a history operation on an audio or a video, and the target audio-video operating data is generated when a target user using an audio or video application, has been deleted from a database, and is to be recovered under a request of the target user; searching a blockchain system for the target audio-video operating data according to the target category, where the blockchain system is configured to store manipulation data generated via the audio or video application, and the manipulation data includes first manipulation data which represents data of operations on audios or videos; storing the target audio-video operating data into the database; and returning the target audio-video operating data to the target user.
In a second aspect, an apparatus for recovering data is provided according to an embodiment of the present disclosure. The apparatus includes: a category acquisition unit, configured to acquire a target category to which target audio-video operating data belongs, where the target audio-video operating data is data of a history operation on an audio or a video, and the target audio-video operating data is generated when a target user using an audio or video application, has been deleted from a database, and is to be recovered under a request of the target user; a data recovery unit, configured to search a blockchain system for the target audio-video operating data according to the target category, where the blockchain system is configured to store manipulation data generated via the audio or video application, and the manipulation data includes first manipulation data which represents data of operations on audios or videos; a data storage unit, configured to store the target audio-video operating data into the database; and a data return unit, configured to return the target audio-video operating data to the target user.
According to a third aspect, an electronic device is provided according to an embodiment of the present disclosure provides. The electronic device includes a processor and a memory, where the processor and the memory are connected via a communication bus, the processor is configured to invoke and execute a program stored in the memory, the memory is configured to store the program, and the program is to implement steps of the method for recovering data.
According to a fourth aspect, a computer-readable storage medium is provided according to an embodiment of the present disclosure. The computer-readable storage medium provides stores a computer program, and the computer program is executed and loaded by a processor to implement steps of the method for recovering data.

According to a fifth aspect, a computer program product is provided according to an embodiment of the present disclosure. The computer program product when executed on a computer configures the computer to implement steps of the method for recovering data.

The method and the apparatus for recovering data, the electronic device, and the storage medium are provided according to embodiments of the present disclosure provide. The target category to which the target audio-video operating data, which is to be requested under the request of the target user, belongs is acquired (where the target audio-video operating data is the data of the history operation on the audio or the video and has been deleted from the database). The blockchain system, which is configured to store the manipulation data (which includes the first manipulation data representing data of the operations on the audios or the videos in the audio/video application) of the audio/video application, may be searched for the target audio-video operating data according to the target category. Thereby, the target audio-video operating data obtained from the query can be stored into the database and can be returned to the audio/video application for the target user to review, implementing recovery of the audio-video operating data which has been deleted from the database.

BRIEF DESCRIPTION OF THE DRAWINGS

Figure 1 is a schematic structural diagram of an audio/video system in conventional technology according to an embodiment of the present disclosure.

Figure 2 is a schematic structural diagram of a blockchain according to an embodiment of the present disclosure.

Figure 3 is a schematic diagram of a process of generating a new block according to an embodiment of the present disclosure.

Figure 4 is a schematic structural diagram of a Merkle tree according to an embodiment of the present disclosure.

Figure 5 is a schematic structural diagram of a data recovery system according to an embodiment of the present disclosure.

Figure 6 is a schematic structural diagram of a data recovery system according to another embodiment of the present disclosure.

Figure 7 is a flowchart of a method for recovering data according to an embodiment of the present disclosure.

Figure 8 is a flowchart of a process for searching a blockchain system, which is configured to store manipulation data of an audio/video application, for target audio-video operating data according to a target category according to an embodiment of the present disclosure.

Figure 9 is a flowchart of a process for acquiring a scope of data recovery which is indicated by a data recovery condition according to an embodiment of the present disclosure.

Figure 10a to Figure 10b are schematic diagrams showing interaction between a database and a cache according to an embodiment of the present disclosure.

Figure 11a to Figure 11d are schematic diagrams of a method for recovering data according to an embodiment of the present disclosure.

Figure 12 is a schematic structural diagram of a apparatus for recovering data according to an embodiment of the present disclosure.

Figure 13 is a block diagram of a hardware structure of an electronic device to which a method for recovering data is applicable according to an embodiment of the present disclosure.

DESCRIPTION OF EMBODIMENTS

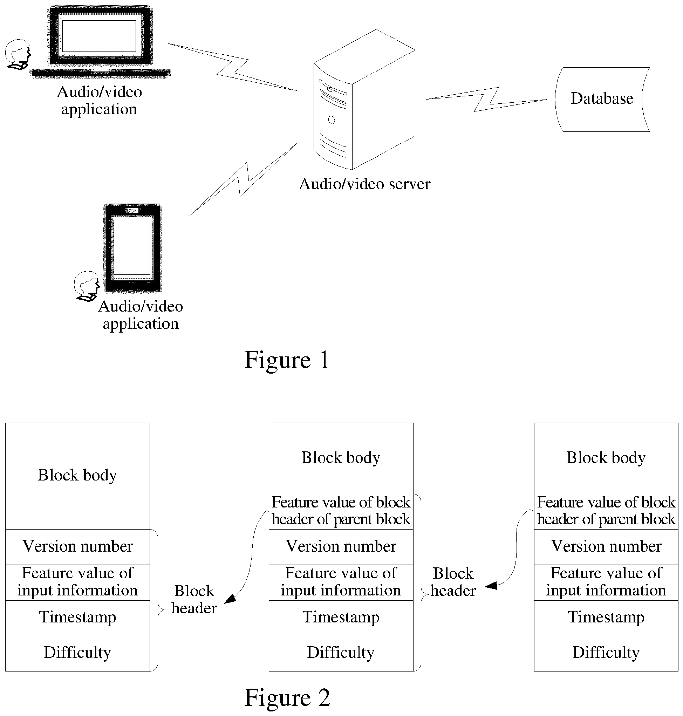

Figure 1 is a schematic structural diagram of an audio/video system according to an embodiment of the present disclosure. As shown in Figure 1, the audio/video system includes a terminal, an audio/video server, and a database. A user may install a client of an audio/video application on the terminal, and the audio/video server is configured to provide a background service for the audio/video application.

A database may be considered as an electronic file cabinet, that is, a location for storing electronic files. A user may perform operate, such as add, query, update, or delete, data in a file. The term "database" refers to a set of data, which is stored together in a specific manner, can be shared among multiple users, has minimized redundancy, and is independent from applications.

In the foregoing audio/video system, when the user performs an operation that triggers an audio/video provided in the audio/video application installed on the terminal, audio-video operating data is correspondingly generated. The audio-video operating data is stored in the database via the audio/video server.

The user may transmit a data query request through the audio/video application. After receiving the data query request transmitted from the audio/video application, the audio/video server searches the database to obtain a result corresponding to the data query request, and returns the result to the audio/video application.

Moreover, the user may transmit a data deletion request through the audio/video application. After receiving the data deletion request transmitted from the audio/video application, the audio/video server deletes to-be-deleted data indicated by the data deletion request completely from the database. Afterwards, in a case that the user retransmits through the audio/video application a request for querying the data that has been completely deleted from the database, the audio/video server receives such request but is incapable to obtain the queried data corresponding to the such request from the database. That is, the user cannot recover the audio-video operating data that has been completely deleted from the database in the foregoing audio/video system.

A novel audio/video system, which may be called a data recovery system, is provided according to an embodiment of the present disclosure provides. The data recovery system is capable to not only recover the audio-video operating data that has been deleted from the database, but also restore the recovered audio-video operating data in the database. Thereby, when the user transmits the request for querying such audio-video operating data, the audio-video operating data can still be found from the database.

Herein a blockchain system is introduced into the data recovery system in order to implement the data recovery. Hereinafter the blockchain system is described in detail.

A blockchain is a new mode which applies computer technology such as distributed data storage, point-to-point transmission, a consensus mechanism, and an encryption algorithm. The blockchain is essentially a decentralized database, and is a series of data blocks associated via a cryptographic means. Each data block includes information on a batch of network transactions, which is configured to check validity of the information (for anti-counterfeiting) and generating a next block. The blockchain may include a blockchain underlying platform, a platform-product service layer, and an application service layer.

The blockchain underlying platform may include processing modules for, for example, user management, basic service, intelligent contracts, and operation supervision. The user management module is responsible for managing identity information of all participants of a blockchain, including maintaining generation of public keys and private keys (account management), managing the keys, and maintaining a relationship between user's real identities and blockchain addresses (authority management), or the like. In case of being authorized, the user management module supervises and audits some real-identity transactions, and provides rule configurations on risk control (risk control audit). The basic service module is deployed on all blockchain node devices to check validity of a service request, and records a valid request onto storage after successful consensus. In case of a new service request, the basic service module first performs parsing and authentication that are adapted to an interface (interface adaptation), then encrypts service information through a consensus algorithm (consensus management), then transmits the new service request with completeness and consistency to a shared ledger the after encryption (network communication), and records and stores such service request. The smart contract module is responsible for registration, issuance, trigger, and execution of a contract. A developer may define contract logic through a programming language, publish the contract logic onto the blockchain (contract registration), invoke a key or another event to trigger the execution according to logic of a contract term, and complete the contract logic. The smart contract module further provides functions of upgrading and cancelling a contract. The operation monitoring module is mainly responsible for deployment, configuration modification, contract configuration, and cloud adaptation during product release, as well as visual output of real-time status during product operation. The visual output concern, for example, alarms, monitoring network conditions, and monitoring health of a node device.

The platform-product service layer provides basic capabilities and implementation frameworks for typical applications. Based on the basic capabilities, the developers may superimpose features of services to implement a blockchain of the service logic. The application service layer provides an application service based on a blockchain solution, such that a participant of the service can use the service.

It is taken as an example that a distributed system serves as the blockchain system. The blockchain system includes multiple nodes. When any node in the blockchain system receives input information, other nodes in the blockchain system obtain and store the input information according to a consensus algorithm, so that data stored in all nodes is consistent among the blockchain system.

Each node in the blockchain system has a corresponding node identifier, and each node in the blockchain system can store the node identifiers of other nodes in the blockchain system, such that it may broadcast a generated block to other nodes in the blockchain system subsequently according to the node identifiers. Each node may maintain a node identifier list as shown in Table 1, and store the node names and the node identifiers correspondingly in the node identifier list. The node identifier may be an Internet Protocol (IP) address and any other type of information capable of identifying a node. The IP addresses in Table 1 are only taken as an example for illustration.

Table 1

| Node name | Node identifier |
| --- | --- |
| Node 1 | 117.114.151.174 |
| Node 2 | 117.116.189.145 |
| ... | ... |
| Node N | 119.123.789258 |

Each node in the blockchain system stores the same blockchain. Reference is made to Figure 2. The blockchain includes multiple blocks. A genesis block includes a block header and a block body, the block header stores a feature value of input information, a version number, a timestamp, and a difficulty value, and the block body stores the input information. Similarly, a next block also includes a block header and a block body, and the block header stores a feature value of input information of the current block, a feature value of the block header of a parent block, a version number, a timestamp, and a difficulty value. The other blocks can be deduced by analogy. Thereby, data stored in each block of the blockchain is associated with the data stored in its parent block, which ensures security of information inputted into the blocks.

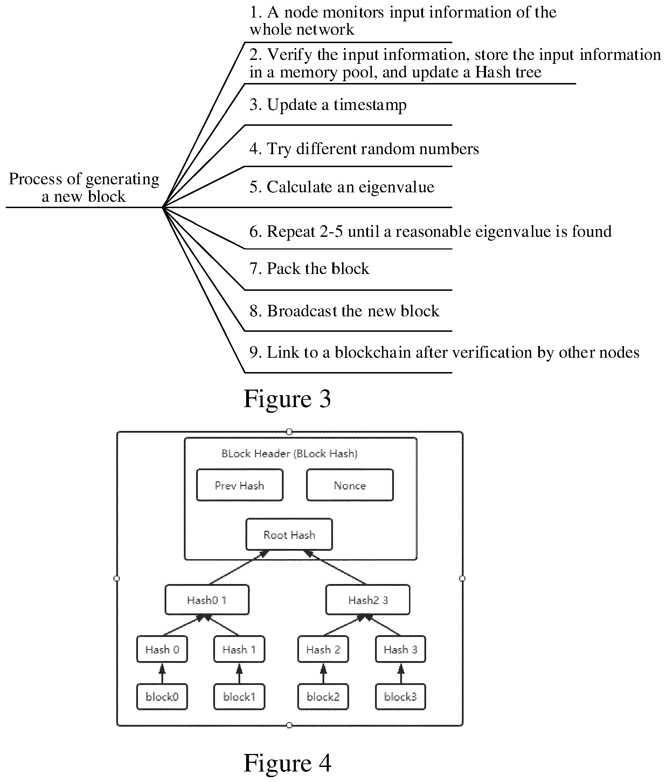

Reference is made to Figure 3. When generating a block in the blockchain, a node in which the blockchain is located receives and verifies input information, then stores the input information into a memory pool, and update a hash tree which is of the block and is configured to record the input information. Afterwards, the timestamp is updated to be a moment when the input information is received. Different random numbers are tried to calculate different feature values, until the calculated feature value satisfies the following condition:

$$SHA256(SHA256(version + prev\_hash + merkle\_root + ntime + nbits + x)) < TARGET$$

$SHA256$ is an algorithm used for calculating the feature value, $version$ (i.e., a version number) carries version information of a relevant block protocol in the blockchain, $prev\_hash$ represents a feature value of the block header of the parent block of a current block, merkle_root represents a feature value of input information, $ntime$ represents a moment at which the timestamp is updated, $nbits$ represents a current difficulty, which is constant within a time period and is refreshed after exceeding the time period, x is the random number, $TARGET$ represents a threshold of the feature value, and the threshold may be determined according to $nbits$.

Thereby, when the random umber satisfying the above condition is determined through calculation, the information may be correspondingly stored, and a block header and a block body are generated to obtain the current block. Subsequently, the node at which the blockchain is located transmits the newly generated block respectively to other nodes in the blockchain system, in which the node is located, according to node identifiers of these nodes. The other nodes verify the newly generated block, and add the newly generated block into the blockchain stored thereon after the verification is successful.

Hereinafter the data recovery system according to embodiments of the present disclosure is further introduced based on the foregoing detailed description of the blockchain system. The data recovery system at least includes a terminal, an audio/video server, a database, and a blockchain system. Hereinafter functions of the terminal, the audio/video server, the database, and the blockchain system are separately illustrated.

The terminal is configured to install a client of an audio/video application, and the client may be implemented in as an app or a web page.

The terminal may be any electronic product that can interact with a user via one or more means, such as a keyboard, a touchpad, a touchscreen, a remote controller, a voice interaction device, a handwriting device, or the like.

For example, the terminal may be a mobile phone, a tablet computer, a notebook computer, a palmtop computer, a personal computer, a smart speaker, a wearable device, a smart TV, a smart watch, or the like, which is not limited herein.

The audio/video server is configured to provide a background service for the audio/video application. The audio/video server may be an independent physical server, may be a server cluster or distributed system composed of multipole servers, or may be a cloud server providing basic cloud computing services, such as a cloud service, a cloud database, cloud computing, cloud functions, cloud storage, network services, cloud communication, a middleware service, a domain name service, a security service, a CDN, and big data and AI platform. The terminal and the audio/video server may be directly or indirectly connected through wired or wireless communication, which is not limited herein.

The database is configured to store audio-video operating data of the audio/video application. For example, the database may be an SQL database, a NoSQL database, or the like, which is not limited herein. Herein the audio-video operating data would be generated when the user performs a trigger operation in the audio/video application on the terminal, and the data recovery system is capable to store the audio-video operating data into the database. Preferably, the audio-video operating data may be stored in the database via the audio/video server in the data recovery system.

A blockchain located in a blockchain node of the blockchain system is configured to store manipulation data of the audio/video application. That is, the manipulation data of the audio/video application is stored as the input information into the block body of the blocks in the block chain.

For example, the manipulation data includes first manipulation data and second manipulation data. The first manipulation data represents data, which is of operations on an audio or a video and is generated via the audio/video application. The second manipulation data represents information of manipulating the audio-video operating data stored in the database.

The blockchain system can implement storage of the manipulation data of the audio/video application through technical characteristics of the blockchain, such as traceability (a chain structure of a block), distribution consistency (a consensus algorithm), and tamper resistance (cryptology). Hereinafter technical implementation of the foregoing three characteristics is described in combination with the manipulation data of the audio/video application.

Traceability. Due to the chain structure of the block, in a case that the user wishes reviewing the audio-video operating data once stored in the database after deleting such data, the user may trace the audio-video operating data according to the chain structure.

Distribution consistency. In practice, the consensus is not complicated to implement and can be simply achieve through a multicast voting, in a case that each node in a distributed system can guarantee fault-free operation with a high performance (e.g., an instant response and high throughput). Nevertheless, there is no such perfect system in reality. In a conventional distributed system, there is always a delay when responding a request, there may be an interruption in a network, there may be a fault in a node, and there may even be a malicious node sabotaging the system. It is assumed that there is no malicious response with respect to the manipulation data of the audio/video application, and hence the consensus mechanism utilizes the Raft algorithm to ensure consistency within the system. A network is organized in a master-slave structure under such mechanism, and can permit less than a half of the nodes to fail.

Tamper resistance. The tamper resistance mainly uses techniques such as encryption, the Merkle tree, and distributed storage.

During the encryption, a hash of account information of a user in the audio/video application serves as an encryption key. Therefore, pre-encryption content of the manipulation data of the user in the audio/video application cannot be obtained without the account information of the user.

The user may obtain the account information by registering in the audio/video application (where the account information includes an account and a password). In a case that the user logs into the audio/video application successfully using the account information, the user may be considered as a logged user, and account information used by the user for logging into the audio/video application may be considered to be the account information of the user in the audio/video application. In a case that the user logs into the audio/video application without using the account information, the user may be considered as an unlogged user (i.e., a guest). In such case, account information used by the user for logging into the audio/video application may be considered to be device information of the terminal on which the audio/video application used by the user is located. The device information includes hardware device information of the terminal and a password assigned to the hardware device information by the audio/video application.

For example, the hardware device information of the terminal may be regarded as a hardware device identifier of the terminal, and the hardware device identifier of the terminal may be regarded as the account.

In an embodiment, the password of the account information may be hashed to obtain a first hash, and then the first hash and the account of the account information are hashed to obtain a second hash. The second hash is utilized to encrypt the manipulation data of the user, and the encrypted manipulation data is stored into the blockchain system.

The Merkle tree can ensure that the data block received by other nodes is not damaged or replaced. A structure of the Merkle tree (a hash tree) is as shown in Figure 4. The Merkle tree is a binary tree consisting of a root node, a set of intermediate nodes, and a set of leaf nodes. As shown in Figure 4, the leaf node in the Merkle tree includes stored data or a hash of the stored data, and a non-leaf node (including the intermediate node and the root node) are a hash of content of two child nodes of the non-leaf node. Any change to underlying data in the Merkle tree would be transferred to the parent node, which means that a value of the root of the Merkle tree actually represents a "numerical digest" of all underlying data. The blockchain system is based on the encryption, the Merkle tree, and the distributed storage, and can effectively prevent the manipulation data, which is of the audio/video application and stored in the blockchain system, from being tampered with.

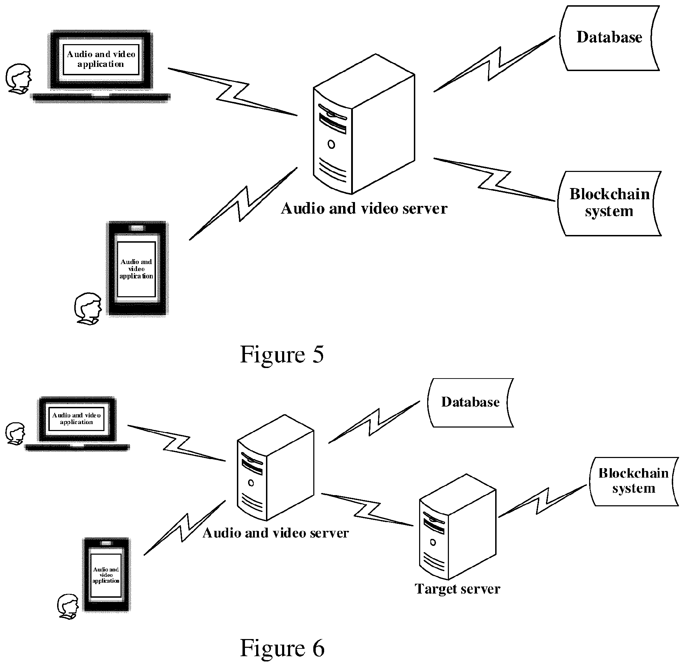

Hereinafter two structures of the data recovery system according to embodiments of the present disclosure are described in detail with reference to Figure 5 and Figure 6, on a basis of the foregoing description of the functions of the terminal, the audio/video server, the database, and the blockchain system, which constitute the data recovery system.

Figure 5 is a schematic structural diagram of a data recovery system according to an embodiment of the present disclosure.

The data recovery system as shown in Figure 5 includes a terminal, an audio/video server, a database, and a blockchain system. Functions of the terminal, the audio/video server, the database, and the blockchain system may refer to the foregoing description, and are not repeated herein.

For example, the method for recovering data according to embodiments of the present disclosure may be applicable to the terminal in the data recovery system as shown in Figure 5, or may be applicable to the audio/video server in the data recovery system as shown in Figure 5.

Figure 6 is a schematic structural diagram of a data recovery system according to another embodiment of the present disclosure.

The data recovery system as shown in Figure 6 includes a terminal, an audio/video server, a target server, a database, and a blockchain system. Functions of the terminal, the audio/video server, the database, and the blockchain system may refer to the foregoing description, and are not repeated herein.

The target server may be an independent physical server, may be a server cluster or distributed system including multiple physical servers, or may be a cloud server providing basic cloud computing services, such as a cloud service, a cloud database, cloud computing, cloud functions, cloud storage, network services, cloud communication, a middleware service, a domain name service, a security service, a CDN, and a big data and AI platform.

For example, the method for recovering data according to embodiments of the present disclosure may be applicable to a target server in the data recovery system as shown in Figure 6.

Figure 5 and Figure 6 are only exemplary diagrams. There may be various types of terminals, which are not limited to the smart phone and the notebook computer as shown in Figure 5 and Figure 6. In addition, only two terminals are depicted in Figure 5 and Figure 6. In practice, a quantity of terminals may be determined according to an actual situation, and is not limited to the quantity as shown in Figure 5 and Figure 6.

Hereinafter the method for recovering data according to embodiments of the present disclosure is described in detail with reference to Figure 5 and Figure 6.

The method for recovering data according to embodiments of the present disclosure is capable to store the audio-video operating data, which is generated by a user performing an operation that triggers an audio/video in the audio/video application, into the blockchain system. That is, the first manipulation data corresponding to the audio-video operating data is stored in the blockchain system.

The method for recovering data according to embodiments of the present disclosure is further capable to trace the audio-video operating data stored within the blockchain system to obtain trace data, and store the trace data into the blockchain system. That is, the first manipulation data stored in the blockchain system further includes the trace data.

Further, in the method for recovering data according to embodiments of the present disclosure, the manipulation performed by the user on the audio-video operating data concerns an operation on the audio-video operating data stored in the database. Correspondingly, in the method, the manipulation performed by the user on the audio-video operating data stored in the database generates second manipulation data. The second manipulation data represents information of the manipulation (that is, the aforementioned operation) of the user on the audio-video operating data, which is of the audio/video application and stored in the database. In an embodiment, the method for recovering data according to embodiments of the present disclosure further stores the second manipulation data into the blockchain system.

The method for recovering data according to embodiments of the present disclosure may store the manipulation data (including the first manipulation data and the second manipulation data), which is generated by the user through the audio/video application, into the blockchain system. Thereby, the audio-video operating data stored in the database can be recovered from the blockchain system after being deleted from the database.

In order to facilitate understanding, it is taken as an example that the method for recovering data according to embodiments of the present disclosure is applied to the audio/video server in the data recovery system as shown in Figure 5. A manner of the data recovery system as shown in Figure 5 implementing the data recovery is described in detail accordingly.

When a user performs an operation that triggers an audio/video provided by an audio/video application on the terminal, the audio-video operating data corresponding to the operation is generated. The audio/video server is capable to store the audio-video operating data in the database and in the blockchain system respectively.

Herein an operation such as playing, cash purchasing, gifting, and credit purchasing performed via the audio/video application may all be regarded as the operation which is performed by the user and triggers the audio/video provided by the audio/video application. Such operation generates the audio-video operating data, and the operation of different types would generate the audio-video operating data of different categories.

For example, when the operation is playing the audio/video, the generated audio-video operating data may be called audio/video playing data, and the audio/video playing data belongs to a category of audio/video playing. For example, when the operation is buying the audio/video with cash, the generated audio-video operating data may be called audio/video cash-purchase data, and the audio/video cash-purchase data belongs to a category of audio/video cash purchasing. For example, when the operation is paying for membership privileges of an audio/video application (i.e., purchasing membership of an audio/video application), the generated audio-video operating data may be called membership privilege purchase data, and the membership privilege purchase data belongs to a category of membership privilege purchasing. For example, when the operation is purchasing the audio/video with credits, the generated audio-video operating data may be called audio/video credit-purchase data, and the audio/video credit-purchase data belongs to a category of audio/video credit purchasing. For example, when the operation is buying the audio/video as a gift, the generated audio-video operating data may be called the audio/video gift data, and the audio/video gift data belongs to a category of audio/video gifting.

Hereinabove is preferable content of the audio-video operating data in embodiments of the present disclosure. The content of the audio-video operating data is not limited herein and may be configured on requirement.

Each piece of audio-video operating data carries a unique data identifier. That is, different pieces of the audio-video operating data carry different data identifiers.

The audio-video operating data may further record time at which the audio-video operating data is generated. For example, the user plays video 1 in the audio/video application from 10:00 on March 03, 2020 to 11:00 on March 03, 2020. Corresponding audio-video operating data is generated for the operation of the user playing the video 1, and the generation time recorded by the audio-video operating data is from 10:00 on March 03, 2020 to 11:00 on March 03, 2020.

The audio/video server is capable to not only store the audio-video operating data, which is generated through the audio/video application, into the blockchain system, but also trace the audio-video operating data in the blockchain system to obtain corresponding trace data and store the trace data into the blockchain system. The audio-video operating data and the trace data in the blockchain system may be regarded as first manipulation data in the blockchain system.

The audio-video operating data is data generated by the operation that triggers the audio/video provided by the audio/video application. Hence, the audio-video operating data may also be regarded as the manipulation data.

The user may transmit a data query request to the audio/video server via the audio/video application on the terminal. The audio/video server searches the database for a target corresponding to the data query request (that is, acquires queried audio-video operating data, which is indicated by the data query request, from the database) after receiving the data query request, and returns the target to the audio/video application. The audio/video application displays the target via a display interface.

The user views the target displayed by the audio/video application on the display interface. In a case that the user does not need some pieces of the audio-video operating data in the target, the user may further transmit a data deletion request to the audio/video server via the audio/video application. The audio/video server may delete such pieces of the audio-video operating data, which are indicated by the data deletion request, from the database after receiving the data deletion request.

In the case that the user does not need some pieces of the audio-video operating data, the user may transmit the data deletion request to the audio/video server via the audio/video application. In such case, the audio/video server only deletes these pieces of the audio-video operating data, which are indicated by the data deletion request, from the database, and does not need to delete these pieces of the audio-video operating data from the blockchain system.

In an embodiment, the audio/video server may further generate second manipulation data which is associated with the data deletion request. The second manipulation data represents information of manipulation on the audio-video operating data stored in the database. Specifically, the second manipulation data associated with the data deletion request represents deleting piece(s) of audio-video operating data, which is indicated by the data deletion request, from the database. The second manipulation data is stored in the blockchain system.

For example, the second manipulation data associated with the data deletion request indicates the piece(s) of the audio-video operating data, which is to be deleted as indicated by the data deletion request. That is to say, the second manipulation data associated with the data deletion request indicates the piece(s) of to-be-deleted audio-video operating data, which is indicated by data deleting manipulation corresponding to the data deletion request. Specifically, the second manipulation data representing the data deleting manipulation may include a data identifier of each piece of the audio-video operating data, which is indicated by the data deleting manipulation. For example, the data deletion request indicates that two pieces of the audio-video operating data are to be deleted. The two pieces of the audio-video operating data are audio-video operating data 1 and audio-video operating data 2, respectively. The data identifier of the audio-video operating data 1 is data identifier 1, and the data identifier of the audio-video operating data 2 is data identifier 2. Correspondingly, the second manipulation data associated with the data deletion request includes the data identifier 1 and the data identifier 2.

In an embodiment, in a case that the user wishes recovering the audio-video operating data that has been deleted from the database, the user may transmit a data recovery request to the audio/video server via the audio/video application. After receiving the data recovery request, the audio/video server searches the blockchain system to obtain a target of the data recovery request (that is, searches the blockchain system for the audio-video operating data, which has been deleted from the database, according to the data recovery request), and stores the obtained audio-video operating data into the database. Thereby, the audio-video operating data that has been deleted from the database is restored in the database. The user may directly search the database for the restored audio-video operating data afterwards. In addition, the audio/video server is capable to not only store the obtained audio-video operating data into the database, but also return the obtained audio-video operating data to the audio/video application. Thereby, the audio/video application can display the received audio-video operating data on the display interface to facilitate review of the user.

In an embodiment, the audio/video server may further generate second manipulation data associated with the data recovery request. The second manipulation data represents information of manipulation on the audio-video operating data stored in the database. Specifically, the second manipulation data associated with the data recovery request represents recovering the piece(s) of the audio-video operating data, which is indicated by the data recovery request, in the database. The second manipulation data is stored in the blockchain system. For example, the second manipulation data associated with the data recovery request indicates the piece(s) of the audio-video operating data which is to be recovered as indicated by the data recovery request. That is, the second manipulation data associated with the data recovery request indicates the piece(s) of the audio-video operating data, which is indicated by the data recovery manipulation corresponding to the data recovery request. Specifically, the second manipulation data representing the data recovery manipulation may include a data identifier of each piece of the audio-video operating data, which is to be recovered as indicated by the data recovery manipulation.

For example, the data recovery request indicates two pieces of the audio-video operating data are to be recovered. The two pieces of audio-video operating data are audio-video operating data 3 and audio-video operating data 4. The data identifier of the audio-video operating data 3 is data identifier 3, and the data identifier of the audio-video operating data 4 is data identifier 4. Correspondingly, the second manipulation data associated with the data recovery request includes the data identifier 3 and the data identifier 4.

The audio-video operating data is generated through the user performing the operation that triggers the audio/video provided by the audio/video application. Both the data deleting manipulation and the data recovery manipulation may be considered as the manipulation performed on the audio-video operating data in the database. The data deleting manipulation is performed on the audio-video operating data in the database to generate the second manipulation data representing the data deleting manipulation, and the data recovery operation is performed on the audio-video operating data in the database to generate the second manipulation data representing the data recovery operation.

The data recovery function according to embodiments of the present disclosure is applicable to the data recovery system. The database in the data recovery system is configured to store the audio-video operating data transmitted from the audio/video server. The blockchain system in the data recovery system is configured to store not only the audio-video operating data stored transmitted from the audio/video server, but also the trace data and the second manipulation data that are transmitted from the audio/video server (herein the audio-video operating data, the trace data, and the second manipulation data of the audio/video application may be all be regarded as the manipulation data of the audio/video application). Since the manipulation data of the audio/video application is stored in the blockchain system, the audio-video operating data in the database can be recovered from the blockchain system after being deleted, and the user may be analyzed according to the manipulation data thereof in the blockchain system to generate a more accurate user portrait.

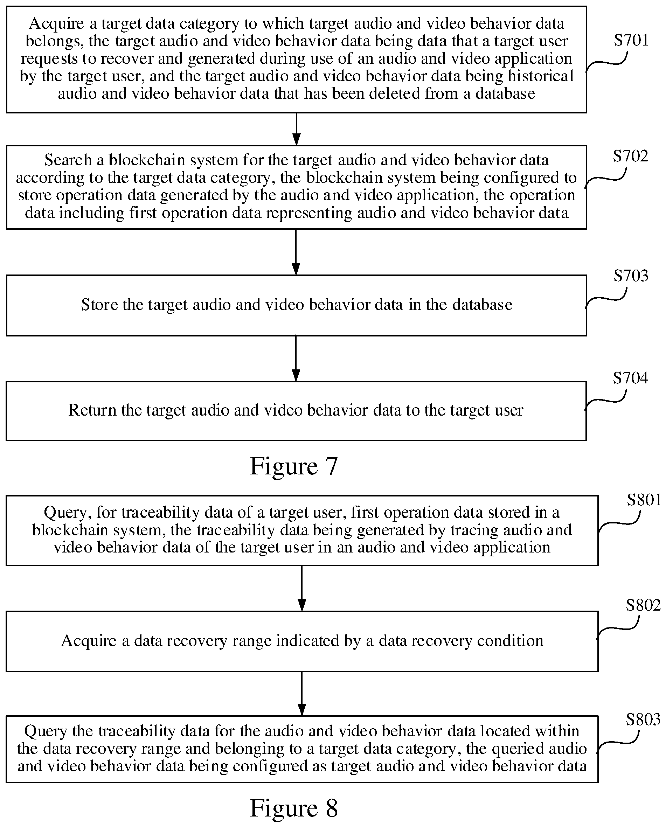

Hereinafter the method for recovering data is illustrated according embodiments of the present disclosure in conjunction with the foregoing data recovery system. Specifically, Figure 7 shows a flowchart of a method for recovering data according to an embodiment of the present disclosure. The method for recovering data as shown in Figure 7 is applicable to an electronic device, which may be the terminal as shown in Figure 5, the audio/video server as shown in Figure 5, or the target server as shown in Figure 6.

In step S701, a target category to which target audio-video operating data belongs is acquired, where the target audio-video operating data is data of a history operation on an audio or a video, and where the target audio-video operating data is generated when a target user using an audio or video application, has been deleted from a database, and is to be recovered under a request of the target user.

A user may use account information to log into the audio/video application on the terminal. In a case that the user logs into the audio/video application successfully through the account information, the user may be considered as a logged user, and an account (vuid) corresponding to the account information serves as an identifier of the user. In a case that the user does not log into the audio/video application successfully through the account information, the user may be considered as an unlogged user, which may be treated as a guest. In such case, a hardware device identifier (guid) of the terminal at which the audio/video application is located may serve as the identifier of the user.

The user may transmit a data recovery request to the audio/video server through the audio/video application on the terminal. The data recovery request carries a data recovery condition, and the data recovery condition is configured to indicate the target category to which the target audio-video operating data, to be recovered under the request of the user, belongs. For distinction, the user that issues the data recovery request may be called the target user. Correspondingly, the data recovery condition carried in the data recovery request indicates the target category to which the target audio-video operating data belongs. The data recovery condition may further carry the user identifier of the target user.

In a case that the target user transmits the data recovery request when logged into the audio/video application successfully through the account information, the user identifier in the data recovery condition carried in the data recovery request is the account in the account information. In a case that the target user transmits the data recovery request without logging into the audio/video application successfully, the user identifier in the data recovery condition carried in the data recovery request is the hardware device identifier of the terminal utilized to transmit the data recovery request.

Herein the audio-video operating data indicated by the data recovery request is the audio-video operating data that is to be recovered, and may be called the target audio-video operating data. The category to which the target audio-video operating data belongs is called the target category. The target category may be the category of audio/video playing, the category of audio/video cash purchasing, the category of membership privilege purchasing, the category of audio/video credit purchasing, the category of audio/video gifting, or the like.

After the user performs the operation that triggers the audio/video provided by the audio/video application, which generates the audio-video operating data, the audio/video server is capable to store the audio-video operating data into the database. The electronic device may further store the audio-video operating data into the blockchain system. For example, the electronic device is the terminal. When the audio/video application generates the audio-video operating data, the audio/video server stores the audio-video operating data into the database, and the terminal stores the audio-video operating data into the blockchain system. For example, the electronic device is the audio/video server. When the audio/video application generates the audio-video operating data, the audio/video server stores the audio-video operating data into both the database and the blockchain system. For example, the electronic device is the target server. When the audio/video application generates the audio-video operating data, the audio/video server stores the audio-video operating data into the database and transmits the audio-video operating data to the target server, and the target server stores the audio-video operating data into the blockchain system.

Hereinabove illustrated are merely several preferable embodiments of the present disclosure. Specific implementations of storing the audio-video operating data into the blockchain system may be configured on requirement, and are not limited herein.

The audio-video operating data generated through the audio/video application should be stored in both the database and the blockchain system. In a case that the user performs the data deleting manipulation on the audio-video operating data generated through the audio/video application, the audio-video operating data, which is to be deleted as indicated by the data deleting manipulation, should be deleted from the database, but no audio-video operating data would be deleted from the blockchain system.

The audio/video server searches the database for a target corresponding to the data query request upon receiving the data query request transmitted by the user. Therefore, in a case that the queried audio-video operating data indicated by the data query request has been deleted from the database, the audio/video server is in capable to find the target corresponding to the data query request.

The data recovery request should be transmitted in a case that the user needs to obtain the audio-video operating data that has been deleted from the database. After receiving the data recovery request, the electronic device would search the blockchain system for the target audio-video operating data (that is, a target of the data recovery request) indicated by the data recovery request. After the target of the data recovery request is found in the blockchain system, the electronic device is capable to not only return the target to the audio/video application, such that the audio/video application may display the target, but also store the target into the database, such that the recovered audio-video operating data can be found in the database when receiving subsequent data query request.

In step S702, a blockchain system is searched for the target audio-video operating data according to the target category, where the blockchain system is configured to store manipulation data generated via the audio or video application, and the manipulation data includes first manipulation data which represents data of operations on audios or videos.

After receiving the data recovery request transmitted by the target user, the electronic device acquires the user identifier carried in the data recovery request, and determines the target category to which the target audio-video operating data, which is to be recovered as indicated by the data recovery request, belongs. The blockchain system can be searched for the target audio-video operating data according to the target category.

Manipulation data of each user using the audio/video application is stored in the blockchain system. The manipulation data of a user includes first manipulation data of the user and second manipulation data of the user.

For example, the first manipulation data of the user includes data of operations performed by the user on the audio/videos in the audio/video application. The electronic device may further obtain trace such data in the blockchain system thereby obtaining trace data of the user, and store the trace data of the user into the blockchain system. Correspondingly, the first manipulation data of the user may include two parts, in which one part is the audio-video operating data generated through the user performing the operation that triggers the audio/video provided by the audio/video application, and another part is the trace data of the user which is generated through tracing the audio-video operating data of the user.

As an example, the user may perform the data deleting manipulation or the data recovery operation on the audio-video operating data. In such case, the electronic device generates second manipulation data, which represents information of manipulation on the audio-video operating data, and store the second manipulation data into the blockchain system.

Both the data deleting manipulation and the data recovery operation, which are performed by the user on the audio-video operating data, involves manipulating the audio-video operating data in the database. For example, the data deleting manipulation performed by the user on the audio-video operating data involves the user deleting the audio-video operating data from the database. The data recovery operation performed by the user on the audio-video operating data would eventually store the recovered audio-video operating data into the database, and hence can be considered as the user manipulating the audio-video operating data in the database.

Therefore, the second manipulation data may represent the information on manipulation performed by the user on the audio-video operating data in the database, that is, represent manipulation performed by the user on the audio-video operating data in the database.

Herein the audio-video operating data of all users who use the audio/video application may be regarded as the audio-video operating data of the audio/video application.

The blockchain system may be searched first for the manipulation data of the user corresponding to the user identifier carried in the data recovery request, and then the target audio-video operating data of the user is found from the manipulation data of the user according to the target category. A specific process of searching the blockchain system for the target audio-video operating data according to the target category may refer to the following detailed description concerning Figure 8, and are not repeated herein.

In step S703, the target audio-video operating data is stored into the database.

In step S704, the target audio-video operating data is returned to the target user.

For example, the electronic device is the terminal. The electronic device may return the target audio-video operating data to the audio/video application after searching the blockchain system and finding the target audio-video operating data, and store the target audio-video operating data into the database. In one embodiment, the terminal may first transmit the target audio-video operating data to the audio/video server, and then the target audio-video operating data is stored in the database via the audio/video server. In another implementation, the terminal stores the target audio-video operating data into the database directly.

For example, the electronic device is the audio/video server. The audio/video server may return the target audio-video operating data to the audio/video application on the terminal after searching the blockchain system and finding the target audio-video operating data, and further store the target audio-video operating data into the database.

For example, the electronic device is the target server. The target server may transmit the target audio-video operating data to the audio/video server after searching the blockchain system and finding the target audio-video operating data. Then the audio/video server returns the target audio-video operating data to the audio/video application on the terminal, and stores target audio/video data is stored into the database.

Herein the electronic device is capable to return the obtained target audio-video operating data to the audio/video application after finding the target audio-video operating data in the blockchain system, so that the target audio-video operating data can be displayed on the display interface of the audio/video application, facilitating review of the user. In addition, the electronic device can further store the target audio-video operating data into the database after finding the target audio-video operating data in the blockchain system. Thereby, the user can transmit the data query request to the audio/video server through the audio/video application when there is a need to query the target audio-video operating data again. In such case, the audio/video server can search the database directly for the target audio-video operating data upon receiving the data query request, and it is not necessary to recover such data from the blockchain system again.

Hereinafter a process of the electronic device searching the blockchain system for the target audio-video operating data according to the target category is illustrated in detail in conjunction with Figure 8. As shown in Figure 8, the process includes steps S801 to S803.

In step S801, the first manipulation data stored in the blockchain is searched for trace data of the target user, where the traced data is generated through tracing the audio-video operating data of the target user in the audio or video application.

The manipulation data stored in the blockchain system includes at least the audio-video operating data, which is generated by the user through the audio/video application. The electronic device may perform tracing at a preset time interval (i.e., every standard period). The tracing involves respective tracing for each user. Taking one user as an example, the tracing for such user may refer to a following step. The audio-video operating data, which is generated by such user through the audio/video application, is traced in the blockchain system to generate trace data of such user.

Still taking one user as an example, the step of tracing the audio-video operating data generated by such user through the audio/video application in the blockchain system to generate the trace data of such user may be implemented in two manner as follows.

In a first manner, a time period from the most recent tracing for the user (a moment of latest tracing performed for such user) to now (a current moment) is determined. Such time period may be called an actual time period to facilitate understanding. The audio-video operating data of the user, which is generated through the audio/video application during the actual time period and stored in the blockchain system, is traced to obtain the trace data of the user during the actual time period. That is, all pieces of the audio-video operating data of the user, which are generated by the audio/video application during the actual time period and stored in the blockchain system, are summarized to obtain the trace data of the user during the actual time period.

The audio-video operating data of the user, which is generated by the audio/video application during the actual time period and are stored in the blockchain system, may be determined in a following manner. The audio-video operating data, which is stored in the blockchain system and generated by the user through the audio/video application, and of which has the generation time located within the actual time period, is determined.

For example, the method for recovering data according to embodiments of the present disclosure is activated at 10:00 on February 03, 2020. It is assumed that the standard period is one day and the user is a first user. In such case, the first tracing may be performed for the first user at 10:00 on February 04, 2020, and all audio-video operating data of the first user from 10:00, February 03, 2020 to 10:00, February 04, 2020 in the audio/video application are summarized based on the blockchain system. The second tracing may be performed for the first user at 10:00 on February 05, 2020, and all audio-video operating data of the first user from 10:00, February 04, 2020 to 10:00, February 05, 2020 in the audio/video application are summarized based on the blockchain system. The third tracing may be performed for the first user at 10:00 on February 06, 2020, and all audio-video operating data of the first user from 10:00, February 05, 2020 to 10:00, February 06, 2020 in the audio/video application are summarized based on the blockchain system.

In a second manner, the audio-video operating data, which is generated by the user through the audio/video application and stored in the blockchain system, are traced throughout history to generate the trace data. That is, all the audio-video operating data, which has been generated by the user through the audio/video application up to now and stored in the blockchain system, are summarized to obtain the trace data of the user. In other words, all history pieces of the audio-video operating data, which is generated by the user through the audio/video application and stored in the blockchain system, are summarized to obtain the trace data of the user.

For example, the method for recovering data according to embodiments of the present disclosure is activated at 10:00 on February 03, 2020. It is assumed that the standard period is one day and the user is a first user. In such case, the first tracing is performed for the first user at 10:00 on February 04, 2020, and all audio-video operating data generated by the first user before 10:00, February 04, 2020 in the audio/video application are summarized based on the blockchain system. The second tracing is performed for the first user at 10:00 on February 05, 2020, and all audio-video operating data generated by the first user before 10:00, February 05, 2020 in the audio/video application are summarized based on the blockchain system. The second tracing is performed for the first user at 10:00 on February 06, 2020, and all audio-video operating data generated by the first user before 10:00, February 06, 2020 in the audio/video application are summarized based on the blockchain system.

The moment when the method for recovering data is activated may be treated as a moment of the first tracing. The moment when the method for recovering data may be a moment at which the method for recovering data starts to be applied.

Herein the server may perform the tracing at a preset time interval (i.e., every standard period). After each tracing is completed, a piece of tracing data may be obtained for each user who uses the audio/video application before such tracing. The obtained pieces of tracing data of all users are treated as the trace data generated by such tracing.

In step S802, a scope of data recovery is obtained, where the scope is indicated by a data recovery condition.

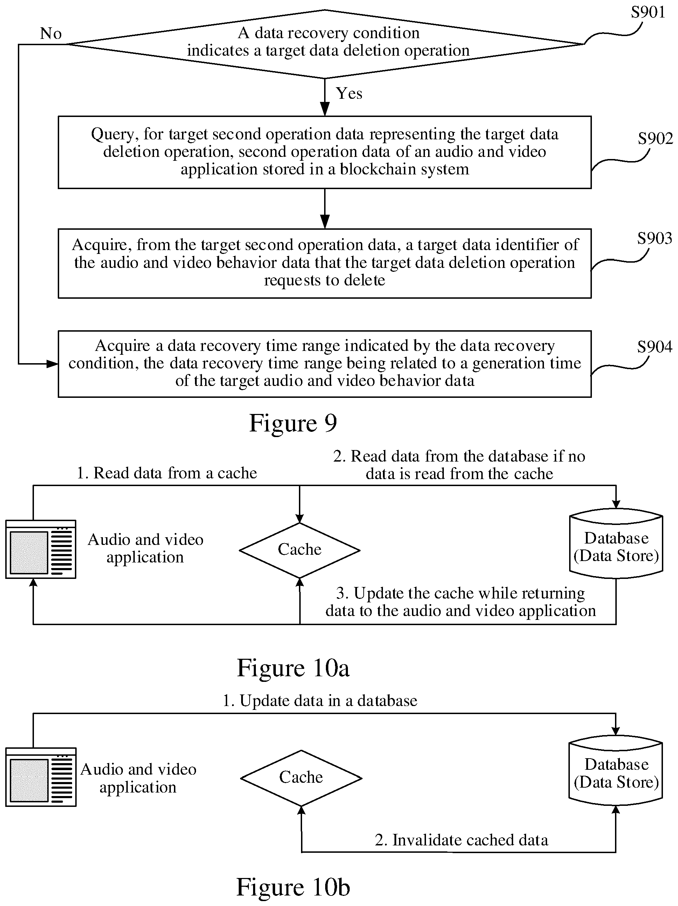

Herein the data recovery condition indicates the scope of data recovery. A manner of obtaining the scope of data recovery indicated by the data recovery condition may refer to following detailed description concerning Figure 9, and is not repeated herein.

In step S803, the trace data is searched for the audio-video operating data, which falls within the scope of data recovery and belongs to the target category, to obtain the target audio-video operating data.

The first manipulation data of the audio/video application stored in the blockchain system is searched for the trace data of the target user, and the scope of data recovery indicated by the data recovery condition is acquired. The trace data of the target user is searched for the audio-video operating data which is located within the scope of data recovery and belongs to the target category.

In one embodiment, all pieces of the trace data of the target user may be obtained from the first manipulation data which is of the audio/video application and stored in the blockchain system, and are treated as at least one piece of trace data of the target user.

In case of the first manner of tracing, the first manipulation data of the audio/video application stored in the blockchain system is searched for at least one piece of trace data of the target user. Each of the at least one piece of trace data corresponds to one unique actual time period, and the actual time periods corresponding to different ones of the at least one piece of trace data do not overlap temporally. Correspondingly, a manner of searching the at least one piece of trace data for the audio-video operating data which is located within the scope of data recovery and belongs to the target category may be as follows. The generation time of the audio-video operating data which is to be recovered as indicated by the scope of data recovery is acquired (that is, the generation time of the target audio-video operating data is acquired). A piece of trace data, which matches the acquired generation time, is determined from the trace data (the determined piece of trace data is called first trace data herein for distinction). The first trace data is searched for the audio-video operating data, which is located within the scope of data recovery and belongs to the target category, to obtain the target audio-video operating data.

A manner of determining the piece of trace data matching the generation time from the trace data may be as follows. The actual time periods corresponding to all pieces of trace data are acquired. Each actual time period, in which the generation time is located, is acquired from the determined actual time periods. Each piece of trace data corresponding to the determined actual time period is determined to be the piece of trace data matching the generation time.

In one embodiment, a manner of acquiring each actual time period in which the generation time is located from the determined actual time periods may be as follows. In a case that one determined actual time period overlaps with the data generation time, such determined actual time period is determined as the actual time period in which the generation time is located.

For example, at least one piece of trace data includes a piece of trace data corresponding to the actual time period of 10:00-11 :00, a piece of trace data corresponding to the actual time period of 11:00-12:00, and a piece of trace data corresponding to the actual time period of 12:00-13:00. In a case that the generation time indicated by the scope of data recovery is 10:30-11:30, the pieces of trace data which match the generation time in the at least one piece of trace data include the piece of trace data corresponding to the actual time period of 10:00-11:00 and the piece of trace data corresponding to the actual time period of 11:00-12:00. There is no temporal overlap among the actual time periods of 10:00-11:00, 11:00-12:00, and 12:00-13:00. For example, the moment 11:00 does not belong to 10:00-11:00, and the moment 12:00 does not belong to 11:00-12:00.

In case of the second manner of tracing, a manner of searching the at least one piece of trace data for the audio-video operating data which is located within the scope of data recovery and belongs to the target category may be as follows. A piece of trace data most recently generated is determined from the trace data (such piece of trace data in the at least one piece of trace data is called second trace data for distinction). The second trace data is searched for the audio-video operating data which is located within the scope of data recovery and belongs to the target category.

In the second manner of tracing, a moment at which the tracing is performed is proportional to a moment at which the piece of trace data is generated by such tracing. That is, the later the tracing is performed, the later the piece of trace data is generated by the tracing operation. Thereby, the trace data of the target user is searched for the piece of trace data that is most recently generated, and such piece of trace data is newest generated trace data among the trace data of the target user.

The later the tracing is performed, the more audio-video operating data the generated trace data covers. For example, the tracing is performed for the first user at 10:00 on February 03, 2020, and all audio-video operating data generated by the user before 10:00, February 03, 2020 in the audio/video application are summarized based on the blockchain system to obtain trace data 1. The tracing is further performed for the first user at 10:00 on March 03, 2020, and all audio-video operating data generated by the first user before 10:00, March 03, 2020 in the audio/video application are summarized based on the blockchain system to obtain trace data 1. The trace data 2 includes the trace data 1.

Herein the first trace data or the second trace data is searched for the audio-video operating data which belongs to the target category, and the obtained audio-video operating data is further searched for the audio-video operating data within the scope of data recovery. Thereby, the finally obtained audio-video operating data within the scope of data recovery may serve as the target audio-video operating data which is to be recovered as indicated by the data recovery request. In embodiments of the present disclosure, the data recovery can be implemented based on the trace data, and it is not necessary to trace the audio-video operating data in the blockchain system after starting the data recovery. Efficiency of data recovery can be effectively improved.

Hereinafter a process of the electronic device acquiring the scope of data recovery indicated by the data recovery condition may refer to Figure 9. Specifically, Figure 9 is a flowchart of a process of acquiring a scope of data recovery which is indicated by a data recovery condition according to an embodiment of the present disclosure.

As shown in Figure 9, the method includes following steps S901 to S904.

In step S901, it is detected whether the data recovery condition indicates target data deleting manipulation. The process proceeds to step S902 in a case that the data recovery condition indicates the target data-deletion, and proceeds to step S904 in a case that the data recovery condition indicates the target data-deletion.

When the target user transmits the data recovery request through the audio/video application, the data recovery request may be transmitted on a basis of data deleting manipulation which is selected by the target user. Thereby, the data recovery condition carried in the data recovery request is associated with the selected data deleting manipulation. For distinction, the data deleting manipulation selected by the target user is called the target data deleting manipulation.

The target data deleting manipulation is data deleting manipulation which is performed through the audio/video application on the audio-video operating data stored in the database under a request of the target user.

For example, the target data deleting manipulation selected by the target user may be the latest data deleting manipulation performed by the target user in history, the latest three data deleting manipulations performed by the target user in history, the latest ten data deleting manipulations performed by the target user in history, or the like. Specific content of the target data deleting manipulation may be set by the target user according to a requirement of the target user, which is not limited herein.

In step S902, the second manipulating data, which is of the audio or video application and stored in the blockchain system, are searched for target second manipulating data representing the target data deleting manipulation.

In an embodiment, in a case that the data recovery condition indicates the target data deleting manipulation, the manipulation data of the target user stored in the blockchain system may be determined first, and the second manipulation data of the target user is determined from the manipulation data of the target user. Thereby, the second manipulation data of the target user can be searched for the second manipulation data representing the target data deleting manipulation. For distinction, the queried second manipulation data representing the target data deleting manipulation is called the target second manipulation data.

In step S903, a target data identifier of the audio-video operating data, which is requested to be deleted in the target data deleting manipulation, is acquired.

Herein the second manipulation data includes the data identifier of the audio-video operating data which is to be deleted as indicated by the data deleting manipulation represented by such second manipulation data. Thereby, the data identifier included in the target second manipulation data may be acquired (the acquired data identifier included in the target second manipulation data is called the target data identifier for distinction), and the target data identifier may serve as the scope of data recovery indicated by the data recovery condition.

Correspondingly, when the scope of data recovery is the target data identifier, a manner of searching the first trace data or the second trace data for the audio-video operating data belonging to the target category and further searching the obtained audio-video operating data for data within the scope of data recovery may be as follows. The first trace data or the second trace data is searched for the audio-video operating data belonging to the target category, and data carrying the target data identifier is obtained from the obtained audio-video operating data.

In step S904, a temporal range of data recovery which is indicated by the data recovery condition is acquired, where the temporal range of data recovery is associated with when the target audio-video operating data is generated.

In an embodiment, in a case that the data recovery condition does indicate no target data deleting manipulation, it is determined whether the data recovery condition carries temporal information representing the temporal range of data recovery. In a case that the data recovery condition carries the temporal information representing the temporal range of data recovery, the temporal information carried in the data recovery condition is acquired (the temporal information carried in the data recovery condition can serve as the temporal range of data recovery indicated by the data recovery condition). In a case that the data recovery condition carries no temporal information representing the temporal range of data recovery, a period from an earliest moment at which the target user uses the audio/video application to the current moment serves as the temporal range of data recovery indicated by the data recovery condition.

Correspondingly, when the scope of data recovery is the temporal range of data recovery, a manner of searching the first trace data or the second trace data for the audio-video operating data belonging to the target category and further searching the obtained audio-video operating data for the audio-video operating data within the scope of data recovery may be as follows. The first trace data or the second trace data is searched for the audio-video operating data which belongs to the target category, and then obtained audio-video operating data is searched for the audio-video operating data which is within the temporal range of data recovery, that is, for the audio-video operating data of which the generation time is located within the temporal range of data recovery.

In one embodiment, in a case that the generation time of the audio-video operating data and the temporal range of data recovery overlap temporally, the audio-video operating data is determined to be within the temporal range of data recovery.

In another embodiment, in a case that the generation time of the audio-video operating data is completely covered by the temporal range of data recovery, the audio-video operating data is determined to be within the temporal range of data recovery. In a case that the generation time of the audio-video operating data overlaps with the temporal range of data recovery temporally but is not completely covered by the temporal range of data recovery, the audio-video operating data is determined not be within the temporal range of data recovery.

As long as there is a moment existing in both time periods, it is determined that the two time periods overlap.

In a case that a temporal range represented by one time period (i.e., a first time period) contains a temporal range represented by another time period (i.e., a second time period), it is determined that the first time period covers the second time period.

Hereinabove illustrated is merely two preferable embodiments showing how to determine whether the audio-video operating data is within the temporal range of data recovery. A specific manner of determining whether the audio-video operating data is within the temporal range of data recovery may be configured on requirement, which is not limited herein.

Herein, when the target user issues the data recovery request through the audio/video application, the data recovery condition carried in the data recovery request is associated with the selected data deleting manipulation in a case that the data recovery request is issued on a basis of the selected data deleting manipulation, and is associated with the selected temporal range of data recovery in a case that the data recovery request is issued on a basis of the selected temporal range of data recovery.

In one embodiment, the data recovery condition carried in the data recovery request indicates a default temporal range of data recovery, in a case that neither the data deleting manipulation nor the temporal range of data recovery is selected when the target user issues the data recovery request through the audio/video application. The default temporal range of data recovery is from the earliest moment at which the target user uses the audio/video application and to the current moment. That is, the moment at which the target user uses the audio/video application for the first time serves as a start, the moment at which the data recovery request currently issued by the target user is currently received serves as an end, and the period between the start and the end may serve as the default temporal range of data recovery.

Herein different data recovery scenarios are configured based on different manners of configuring the scope of data recovery. Accordingly, means of data recovery ways are enriched at a side of the audio/video application side for the user, which improves the convenience of recovering user's data.

Hereinafter the database in the data recovery system is to be further illustrated based on the foregoing detailed description concerning the method for recovering data and the data recovery system according to embodiments of the present disclosure. The database is configured to store the audio-video operating data. For example, the audio-video operating data of the user is stored through MySQL. In a design of storage, vuid of a user account serves as an identifier for a logged user, and guid of a device serves as an identifier for an unlogged user. Taking the audio-video playing data as an example, the MySQL table structure of the audio/video playing data of the logged user may be as shown in Table 2.

Table 2 Table structure of audio/video playing data of a logged user

| Field | Category | Note |
| --- | --- | --- |
| vuid | int64 | User ID |
| cid | string | Album |
| vid | string | List |
| watch_time | date | Watching time |
| duration | int64 | Watching duration |
| platfrom | int | Platform number |
| guid | string | Device ID |
| location | string | Watching geographical location |
| scene | int | Watching scene |

In addition, the database provided in this embodiment of the present disclosure adopts following designs based on a scale of users and an amount of requests.

1. Since there are several hundreds of millions of users or devices, the table is split into 512 tables in a design of storage according to a dimension of vuid.

2. Reading and writing functions are separated in the database. An interface of online query is configured to request the read function of the database (where the user reviews history data), and online writing (when the user plays the video or deletes the history data) is configured to request the writing function of the database.

3. Data redundancy is provided. Multiple copies of the history data are stored into multiple databases for back up, in order to prevent data loss.

4. A multi-site-multi-live scheme is adopted. Data is distributed with redundancy among five main cities among a country in order to reduce request delays of users in different regions of the country.

An amount of readings and writings on the audio/video watching data is quite large (when a user plays a video or views a page like a TV homepage, the user pulls of the history playing data). Therefore, in a case that all requests perform readings and writings on the database, the database cannot support the requests when their amount reaches a peak. In order to reduce a burden of the database, a cache layer is added for the readings and writings of requests. Processing of reading requests and writing requests and a consistency design between the cache and the database are as shown in Figure 10a to Figure 10b.

Reference is made to Figure 10a. When requesting data, the data is directly returned in case of being in a cache. Otherwise, the request is transferred to the database, and the cache is updated when after the data is retrieved from the database. Reference is made to Figure 10b. When updating data, the database is updated first, and the data in the cache is invalidated.

Besides data of playing an audio/video (the audio/video playing data), the audio-video operating data of the user further includes data of purchasing an audio/video with cash, data of purchasing an audio/video as a gift, data of purchasing audio/video with credits, and data of giving a "like" or a "support" for an audio/video. The storage design of these data is basically similar to that of the data of playing an audio-video, where differences lies in a structure of the table and some design details (for example, an amount of online requests concerning these data is not as high as that concerning the data of playing an audio/video, and therefore the database is directly read without reading a cache in case of a request).

Herein the data base adopts a multi-copy backup mechanism, which effectively improves stability and anti-risk robustness of the database. Moreover, the database adopts the multi-site-multiple-live scheme and implements data retrieval by utilizing the cache layer, which reduces the burden on the database effectively and improves efficiency of the data retrieval.

A data recovery scenario is further provided according to embodiment of the present disclosure. The method for recovering data according to embodiments of the present disclosure is applicable to the scenario. Hereinafter a manner of implementing of the method in the data recovery scenario is illustrated in detail.

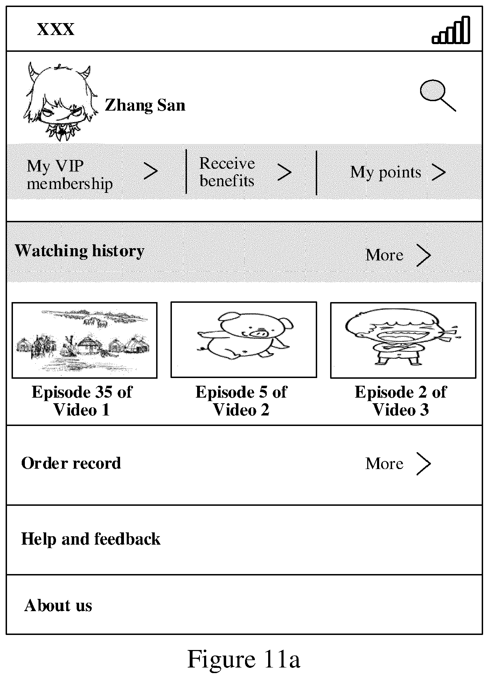

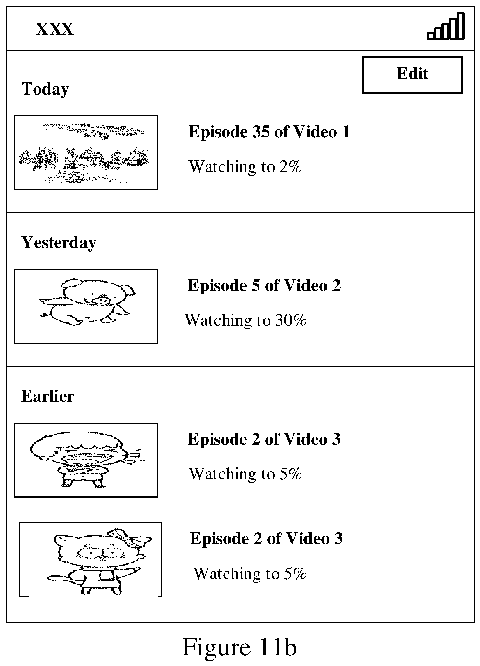

A user using a user name "Sam" activates an audio/video application and enters a first user interface as shown in Figure 11a. A section of "History" is displayed on the first user interface. It is taken as an example that such user has never deleted his/her own audio-video operating data. When the user enters the first user interface, the section of "History" in the first user interface displays the audio-video operating data which is recently generated by "Sam". When the user clicks/taps "More" in the section of "History", the display jumps to a second user interface as shown in Figure 11b.

A detailed playing history of "Sam" is displayed on the second user interface as shown in Figure 11b. Reference is made to Figure 11b. The user may trigger a data deleting manipulation on the audio-video operating data in the detailed playing history through an "Edit" button on the second user interface.

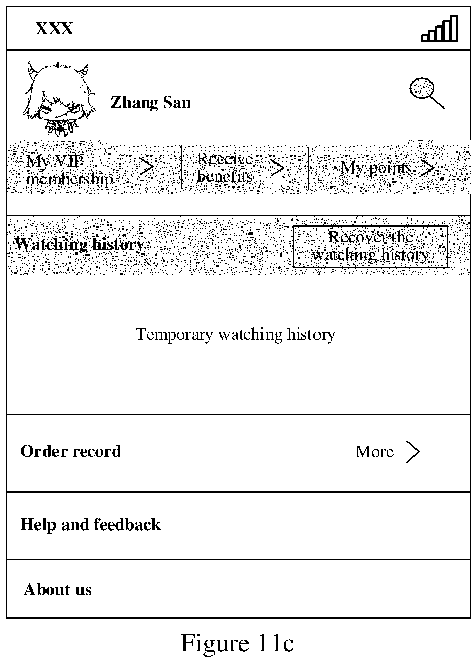

It is assumed that the audio-video operating data in the detailed playing history of "Sam" is cleared by editing through the "Edit" button. After the user clears the detailed playing history of "Sam" (correspondingly, the detailed playing history of "Sam" stored in the database is deleted) and returns to the first user interface, the first user interface is displayed as shown in Figure 11c.

As shown in Figure 11c, after clearing the audio-video operating data in the detailed playing history of "Sam" and returning to the first user interface, the first user interface cannot retrieve any audio-video operating data of "Sam" from the database on. Therefore, the content in the section of "History" is empty as shown in Figure 11c.

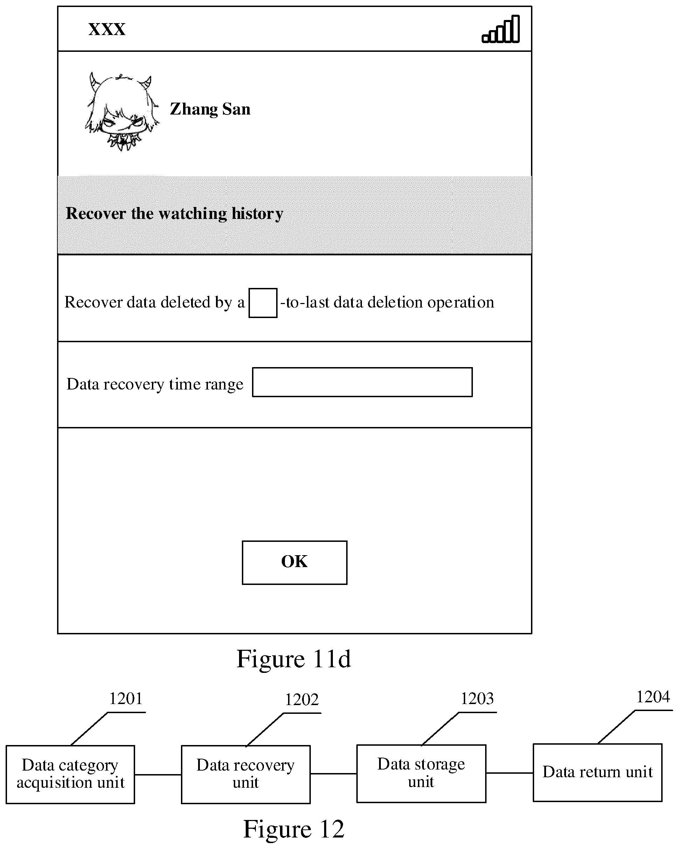

Reference is made to Figure 11c, in a case that the content of the "History" is empty, the first user interface provides a "Recover record" button. When the user clicks/taps the "Recover record" button, and a history recovery interface may be displayed. The history recovery interface is as shown in Figure 11d.

The user may write to indicate that data deleted by which data deleting manipulation is required to recover, or write a temporal range of data recovery, in the watching history recovery interface as shown in Figure 11d. The user clicks/taps the "OK" button as shown in Figure 11d after the writing, in order to trigger the server of the audio/video application to recover the data from the blockchain system.

Herein it may be permitted that the user does not write any information in the interface as shown in Figure 11d. That is, the user may neither indicate the data deleting manipulation nor write the temporal range of data recovery, and clicks/taps the "OK" button directly. In such case, the server of the audio/video application may recover all history audio-video operating data of "Sam" from the blockchain system and display the recovered data, that is, switch the displayed interface to the state as shown in Figure 11b.

Herein all recovered history audio-video operating data of "Sam" may further be restored into the database. Thereby, when the user enters the first user interface again, the audio/video application can retrieve the audio-video operating data of "Sam" directly from the database, and hence the first user interface is displayed as shown in Figure 11a.

The playing history may be considered as the audio/video playing data. The schematic diagrams of data recovery as shown in Figure 11a to Figure 11d concerns the recovery of the data belonging to the category of audio/video playing. In a case that the user wishes recovering data belonging to another category, the user may use another button on the interface. For example, the purchases as indicated in Figure 11a may be considered as the audio/video cash-purchasing data. The user clicks/taps the "Purchases" button as shown in Figure 11a to retrieve all the audio/video cash-purchasing data of "Sam" from the database, and thereby the audio/video cash-purchasing data of "Sam" may be manipulated, such as deleted or recovered. Herein a process of recovering the data belonging to the category of cash purchase is not described in detail.

The method for recovering data according to embodiments of the present disclosure may provide a new function of recovering dated records as user's experience on a product. Security is strengthened in comparison with conventional storage schemes based on NoSQL or SQL, and there is no risk of deleting user data erroneously by a user. In the conventional storage schemes, only the audio-video operating data of the user may be stored, for example, data concerning playing history, purchase records, or the like. The method for recovering data according to embodiments of the present disclosure stores both the audio-video operating data of the user and the manipulation data of the user on the audio-video operating data, for example, stores the second manipulation data representing the data deleting manipulation, the data recovery operation, and the like. Such data may be utilized to implement a better user portrait and analysis, which improves accuracy of the user portrait and provides a better data basis for user-portrait analysis.

Figure 12 is a schematic structural diagram of an apparatus for recovering data according to an embodiment of the present disclosure.

As shown in Figure 12, the apparatus includes a category acquisition unit 1201, a data recovery unit 1202, a data storage unit 1203, and a data return unit 1204.

The category acquisition unit 1201 is configured to acquire a target category to which target audio-video operating data belongs, where the target audio-video operating data is data of a history operation on an audio or a video, and the target audio-video operating data is generated when a target user using an audio or video application, has been deleted from a database, and is to be recovered under a request of the target user.

The data recovery unit 1202 is configured to search a blockchain system for the target audio-video operating data according to the target category, where the blockchain system is configured to store manipulation data generated via the audio or video application, and the manipulation data includes first manipulation data which represents data of operations on audios or videos.

The data storage unit 1203 is configured to store the target audio-video operating data into the database.

The data return unit 1204 is configured to return the target audio-video operating data to the target user.

In a preferable embodiment, the category acquisition unit includes a data recovery request receiving unit and a category acquisition subunit.

The data recovery request receiving unit is configured to: receive a data recovery request issued by the target user, where the data recovery request carries a data recovery condition, the data recovery condition is configured to indicate the target category to which the target audio-video operating data belongs, and the audio-video operating data corresponding to the operations of different types belong to different data categories.

The category acquisition subunit is configured to parse the data recovery condition in the data recovery request to determine the target category to which the target audio-video operating data belongs.

In a preferable embodiment, the data recovery unit includes a trace data determination unit, a data recovery scope acquisition unit, and a data recovery subunit.

The trace data determination unit is configured to search the first manipulation data stored in the blockchain for trace data of the target user, where the trace data is generated through tracing the audio-video operating data of the target user in the audio or video application.

The data recovery scope acquisition unit is configured to obtain a scope of data recovery that is indicated by the data recovery condition.

The data recovery subunit is configured to search the trace data for the audio-video operating data, which falls within the scope of data recovery and belongs to the target category, to obtain the target audio-video operating data.

In a preferable embodiment, the manipulation data further includes second manipulation data representing information of manipulation on the audio-video operating data, which is of the audio or video application and stored in the database. Correspondingly, the data recovery scope acquisition unit includes an operation detection unit, a query unit, and a data identifier acquisition unit.

The operation detection unit is configured to detect whether the data recovery condition indicates target data deleting manipulation, where the target data deleting manipulation is a deletion operation, which is requested by the target user and performed through the audio/video application, on the audio-video operating data stored in the database.

The query unit is configured to search the second manipulation data, which is of the audio or video application and stored in the blockchain system, for target second manipulation data representing the target data deleting manipulation.

The data identifier acquisition unit is configured to obtain a target data identifier of the audio-video operating data, which is requested to be deleted in the target data deleting manipulation, from the target second manipulation data.

In an embodiment, the acquisition unit further includes a data recovery temporal range acquisition unit.

The data recovery temporal range acquisition unit is configured to obtain a temporal range of data recovery which is indicated by the data recovery condition, where the temporal range of data recovery is associated with when the target audio-video operating data is generated.

In a preferable embodiment, the data recovery temporal range acquisition unit includes a temporal information detection unit, a temporal information acquisition unit, and a temporal range determination unit.

The temporal information detection unit is configured to detect whether the data recovery condition carries temporal information representing the temporal range of data recovery.

The temporal information acquisition unit is configured to acquire the temporal information in a case that the data recovery condition carries the temporal information representing the temporal range of data recovery.

The time range determination unit is configured to determine that the temporal range of data recovery is from an earliest moment at which the target user uses the audio or video application to a current moment, in a case that the data recovery condition does not carry the temporal information representing the temporal range of data recovery.

The apparatus for recovering data according to embodiments of the present disclosure may further include a trace data generation unit.

In one embodiment, the trace data generation unit includes a first detection unit and a first generation unit.

The first detection unit is configured to detect whether target duration reaches a preset standard period, where the target duration is an actual period between the current moment and a moment at which a previous tracing operation is performed.

The first generation unit is configured to trace the audio-video operating data, which is generated during the actual time period through the audio/video application and stored in the blockchain system, to generate trace data for the actual time period, in a case that the target duration reaches the standard duration.

Correspondingly, the data recovery subunit includes a data generation time acquisition unit, a first trace data determination unit, and a first recovery unit.

The data generation time acquisition unit is configured to acquire generation time of the target audio-video operating data, which is indicated by the scope of data recovery.

The first trace data determination unit is configured to determine first trace data, which matches the generation time, from the trace data.

The first recovery unit is configured to search the first trace data for the audio-video operating data, which is located within the scope of data recovery and belongs to the target category.

In an embodiment, the trace data generation unit includes a second detection unit and a second generation unit.

The second detection unit is configured to detect whether target duration reaches a preset standard period, where the target duration is an actual period between the current moment and a moment at which a previous tracing operation is performed.

The second generation unit is configured to trace the audio-video operating data, which is of the audio or video application and stored in the blockchain system, to generate trace data for the actual time period, in a case that the target duration reaches the standard duration.

Correspondingly, the data recovery subunit includes a second trace data determination unit and a second recovery unit.

The second trace data determination unit is configured to determine second trace data, which is generated most recently, from the trace data.

The second recovery unit is configured to search the second trace data for the audio-video operating data, which is located within the scope of data recovery and belongs to the target category.

In an embodiment, the apparatus for recovering data provided further includes a data storage unit. The data storage unit includes a second manipulation data generation unit and a second manipulation data storage subunit.

The second manipulation data generation unit is configured to generate second manipulation data, which is associated with the data recovery request, according to the target audio-video operating data.

The second manipulation data storage subunit is configured to store the second manipulation data into the blockchain system.

In an embodiment, the apparatus for recovering data further includes a user portrait unit. The user portrait unit is configured to analyze the manipulation data of the target user in the audio/video application to generate a user portrait of the target user.

The apparatus for recovering data according to embodiments of the present disclosure is capable to perform following operations. The target category to which the target audio-video operating data, which is to be requested under the request of the target user, belongs is acquired (where the target audio-video operating data is the data of the history operation on the audio or the video and has been deleted from the database). The blockchain system, which is configured to store the manipulation data (which includes the first manipulation data representing data of the operations on the audios or the videos in the audio/video application) of the audio/video application, may be searched for the target audio-video operating data according to the target category. Thereby, the apparatus can store the target audio-video operating data obtained from the query into the database and return the target audio-video operating data to the audio/video application for the target user to review, implementing recovery of the audio-video operating data which has been deleted from the database.

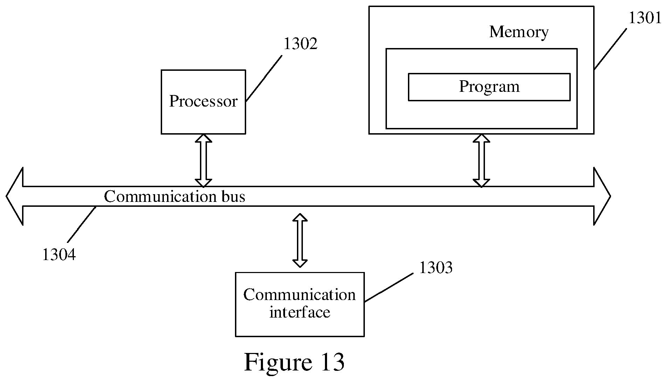

Reference is made to Figure 13, which is a structural diagram of an electronic device provided according to an embodiment of the present disclosure. The electronic device includes a memory 1301 and a processor 1302.

The memory 1301 is configured to store a program;

The processor 1302 is configured to execute a program. The program is specifically configured to perform following operations.

A target category to which target audio-video operating data belongs is acquired, where the target audio-video operating data is data of a history operation on an audio or a video, and the target audio-video operating data is generated when a target user using an audio or video application, has been deleted from a database, and is to be recovered under a request of the target user.

A blockchain system is searched for the target audio-video operating data according to the target category, where the blockchain system is configured to store manipulation data generated via the audio or video application, and the manipulation data includes first manipulation data which represents data of operations on audios or videos.

The target audio-video operating data is stored into the database.

The target audio-video operating data is returned to the target user.

The processor 1302 may be a central processing unit (CPU) or an application specific integrated circuit (ASIC).

The control device may further include a communication interface 1303 and a communication bus 1304. The memory 1301, the processor 1302, and the communication interface 1303 communicate with each other via the communication bus 1304.

A readable storage medium is further provided according to embodiments of the present disclosure. The readable storage medium stores a computer program. The computer program when being loaded and executed by a processor implements the steps of the foregoing method for recovering data. Specific implementation may refer to description in corresponding parts of the foregoing embodiments, and are not repeated herein.

A computer program product or a computer program is further provided according to embodiments of the present disclosure. The computer program product or the computer program includes computer instructions. The computer instructions are stored in a computer-readable storage medium. A processor of a computer device reads the computer instructions from the computer-readable storage medium, and executes the computer instructions, so that the computer device implements the process provided in embodiments of the foregoing method for recovering data or the foregoing apparatus for recovering data. Specific implementation may refer to description in corresponding parts of the foregoing embodiments, and are not repeated herein.

The method and the apparatus for recovering data, the electronic device, and the storage medium are provided according to embodiments of the present disclosure provide. The target category to which the target audio-video operating data, which is to be requested under the request of the target user, belongs is acquired (where the target audio-video operating data is the data of the history operation on the audio or the video and has been deleted from the database). The blockchain system, which is configured to store the manipulation data (which includes the first manipulation data representing data of the operations on the audios or the videos in the audio/video application) of the audio/video application, may be searched for the target audio-video operating data according to the target category. Thereby, the target audio-video operating data obtained from the query can be stored into the database and can be returned to the audio/video application for the target user to review, implementing recovery of the audio-video operating data which has been deleted from the database.

Hereinabove the method and the apparatus for recovering data, the electronic device, and the storage medium according to embodiments of the present invention are illustrated in detail. Although the principles and implementations of the present disclosure are described herein by using specific examples, the description of the foregoing embodiments are merely intended for help understand the method and the core concept thereof. Meanwhile, a person of ordinary skill in the art may make modifications to the specific implementations and application scope according to the concepts of the present invention. In conclusion, the content of the specification should not be construed as a limitation to the present disclosure.

**Claims**

1. A method for recovering data, executable on an electronic device, wherein the method comprises:

   acquiring a target category to which target audio-video operating data belongs, wherein the target audio-video operating data is data of a history operation on an audio or a video, and the target audio-video operating data is generated when a target user using an audio or video application, has been deleted from a database, and is to be recovered under a request of the target user;

searching a blockchain system for the target audio-video operating data according to the target category, wherein the blockchain system is configured to store manipulation data generated via the audio or video application, and the manipulation data comprises first manipulation data which represents data of operations on audios or videos;

storing the target audio-video operating data into the database; and

returning the target audio-video operating data to the target user.

2. The method according to claim 1, wherein acquiring the target category to which target audio-video operating data belongs comprises:

receiving a data recovery request issued by the target user, wherein the data recovery request carries a data recovery condition, the data recovery condition is configured to indicate the target category to which the target audio-video operating data belongs, and the audio-video operating data corresponding to the operations of different types belong to different data categories; and

parsing the data recovery condition in the data recovery request to determine the target category to which the target audio-video operating data belongs.

3. The method according to claim 2, wherein searching the blockchain system for the target audio-video operating data according to the target category comprises:

searching the first manipulation data stored in the blockchain for trace data of the target user, wherein the trace data is generated through tracing the audio-video operating data of the target user in the audio or video application;

obtaining a scope of data recovery that is indicated by the data recovery condition; and

searching the trace data for the audio-video operating data, which falls within the scope of data recovery and belongs to the target category, to obtain the target audio-video operating data.

4. The method according to claim 3, wherein:

the manipulation data further comprises second manipulation data representing information of manipulation on the audio-video operating data, which is of the audio or video application and stored in the database, and

obtaining the scope of data recovery that is indicated by the data recovery condition comprises:

detecting whether the data recovery condition indicates target data deleting manipulation, wherein the target data deleting manipulation is a deletion operation, which is requested by the target user and performed through the audio or video application, on the audio-video operating data stored in the database;

in a case that the data recovery condition indicates target data deleting manipulation,

searching the second manipulation data, which is stored in the blockchain system, for target second manipulation data representing the target data deleting manipulation; and

obtaining a target data identifier of the audio-video operating data, which is requested to be deleted in the target data deleting manipulation, from the target second manipulation data.

5. The method according to claim 4, wherein in a case that the data recovery condition does not indicate the target data deleting manipulation, the method further comprises:
obtaining a temporal range of data recovery which is indicated by the data recovery condition, wherein the temporal range of data recovery is associated with when the target audio-video operating data is generated.

6. The method according to claim 5, wherein acquiring the target category to which target audio-video operating data belongs comprises:

detect whether the data recovery condition carries temporal information representing the temporal range of data recovery;

acquiring the temporal information in a case that the data recovery condition carries the temporal information representing the temporal range of data recovery; and

determining that the temporal range of data recovery is from an earliest moment at which the target user uses the audio or video application to a current moment, in a case that the data recovery condition does not carry the temporal information representing the temporal range of data recovery.

7. The method according to claim 3, wherein the trace data is generated by:

detecting whether target duration reaches a preset standard period, wherein the target duration is an actual period between the current moment and a moment at which a previous tracing operation is performed; and tracing the audio-video operating data, which is generated during the actual time period through the audio or video application and stored in the blockchain system, to generate trace data for the actual time period, in a case that the target duration reaches the standard duration.

8. The method according to claim 7, wherein searching the trace data for the audio-video operating data, which falls within the scope of data recovery and belongs to the target category, comprises:

acquiring generation time of the target audio-video operating data, which is indicated by the scope of data recovery;
determining first trace data, which matches the generation time, from the trace data; and
searching the first trace data for the audio-video operating data, which is located within the scope of data recovery and belongs to the target category.

9. The method according to claim 3, wherein the trace data is generated by:

detecting whether target duration reaches a preset standard period, wherein the target duration is an actual period between the current moment and a moment at which a previous tracing operation is performed; and tracing the audio-video operating data, which is of the audio or video application and stored in the blockchain system, to generate trace data for the actual time period, in a case that the target duration reaches the standard duration.

10. The method according to claim 9, wherein searching the trace data for the audio-video operating data, which falls within the scope of data recovery and belongs to the target category, comprises:

determining second trace data, which is generated most recently, from the trace data; and
searching the second trace data for the audio-video operating data, which is located within the scope of data recovery and belongs to the target category.

11. The method according to claim 2, further comprising:

generating second manipulation data, which is associated with the data recovery request, according to the target audio-video operating data; and
storing the second manipulation data into the blockchain system.

12. The method according to claim 1, further comprising:
analyzing the manipulation data of the target user in the audio or video application to generate a user portrait of the target user.

13. An apparatus for recovering data, comprising:

a category acquisition unit, configured to acquire a target category to which target audio-video operating data belongs, wherein the target audio-video operating data is data of a history operation on an audio or a video, and the target audio-video operating data is generated when a target user using an audio or video application, has been deleted from a database, and is to be recovered under a request of the target user;
a data recovery unit, configured to search a blockchain system for the target audio-video operating data according to the target category, wherein the blockchain system is configured to store manipulation data generated via the audio or video application, and the manipulation data comprises first manipulation data which represents data of operations on audios or videos;
a data storage unit, configured to store the target audio-video operating data into the database; and
a data return unit, configured to return the target audio-video operating data to the target user.

14. An electronic device, comprising a processor and a memory, wherein:

the processor and the memory are connected via a communication bus;
the processor is configured to invoke and execute a program stored in the memory, and the memory is configured to store the program; and
the program is configured to implement the method according to any one of claims 1 to 12.

15. A computer-readable storage medium, storing a computer program, wherein:
the computer program when loaded and executed by a processor implements the method according to any one of claims 1 to 12.

16. A computer program product, comprising instructions, wherein:
the instructions when executed by a computer configure the computer to perform the method according to any one of claims 1 to 12.

Figure 1

Figure 2

1. A node monitors input information of the whole network

2. Verify the input information, store the input information in a memory pool, and update a Hash tree

3. Update a timestamp

4. Try different random numbers

5. Calculate an eigenvalue

Process of generating a new block

6. Repeat 2-5 until a reasonable eigenvalue is found

7. Pack the block

8. Broadcast the new block

9. Link to a blockchain after verification by other nodes

Figure 3

BLock Header (BLock Hash)

Prev Hash

Nonce

Root Hash

Hash0 1

Hash2 3

Hash 0

Hash 1

Hash 2

Hash 3

block0

block1

block2

block3

Figure 4

Figure 5

Figure 6

Acquire a target data category to which target audio and video behavior data belongs, the target audio and video behavior data being data that a target user requests to recover and generated during use of an audio and video application by the target user, and the target audio and video behavior data being historical audio and video behavior data that has been deleted from a database

S701

Search a blockchain system for the target audio and video behavior data according to the target data category, the blockchain system being configured to store operation data generated by the audio and video application, the operation data including first operation data representing audio and video behavior data

S702

Store the target audio and video behavior data in the database

S703

Return the target audio and video behavior data to the target user

S704

Figure 7

Query, for traceability data of a target user, first operation data stored in a blockchain system, the traceability data being generated by tracing audio and video behavior data of the target user in an audio and video application

S801

Acquire a data recovery range indicated by a data recovery condition

S802

Query the traceability data for the audio and video behavior data located within the data recovery range and belonging to a target data category, the queried audio and video behavior data being configured as target audio and video behavior data

S803

Figure 8

No ← A data recovery condition indicates a target data deletion operation    S901

↓ Yes

Query, for target second operation data representing the target data deletion operation, second operation data of an audio and video application stored in a blockchain system    S902

↓

Acquire, from the target second operation data, a target data identifier of the audio and video behavior data that the target data deletion operation requests to delete    S903

↓

Acquire a data recovery time range indicated by the data recovery condition, the data recovery time range being related to a generation time of the target audio and video behavior data    S904

## Figure 9

1. Read data from a cache    2. Read data from the database if no data is read from the cache

Audio and video application    Cache    Database (Data Store)

3. Update the cache while returning data to the audio and video application

## Figure 10a

1. Update data in a database

Audio and video application    Cache    Database (Data Store)

2. Invalidate cached data

## Figure 10b

XXX

Zhang San

| My VIP membership > | Receive benefits > | My points > |

**Watching history** More >

Episode 35 of
Video 1

Episode 5 of
Video 2

Episode 2 of
Video 3

Order record More >

Help and feedback

About us

Figure 11a

**XXX**

Today

**Episode 35 of Video 1**

Watching to 2%

Edit

Yesterday

**Episode 5 of Video 2**

Watching to 30%

Earlier

**Episode 2 of Video 3**

Watching to 5%

**Episode 2 of Video 3**

Watching to 5%

Figure 11b

XXX

Zhang San

| My VIP membership > | Receive benefits > | My points > |

**Watching history**   | Recover the watching history |

Temporary watching history

**Order record**                                    More >

**Help and feedback**

**About us**

Figure 11c

XXX

**Zhang San**

**Recover the watching history**

Recover data deleted by a [ ] -to-last data deletion operation

Data recovery time range [_____]

OK

Figure 11d

| 1201 | 1202 | 1203 | 1204 |
|---|---|---|---|
| Data category acquisition unit | Data recovery unit | Data storage unit | Data return unit |

Figure 12

Figure 13

## INTERNATIONAL SEARCH REPORT

| International application No. |
| --- |
| **PCT/CN2021/112005** |

**A.    CLASSIFICATION OF SUBJECT MATTER**

G06F 16/22(2019.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, CNKI, ISI: 数据, 找回, 行为, 目标, 种类, 删除, 数据库, 历史, 区块链, 操作, data, retrieve, behavior, target, type, delete, database, historical, blockchain, operation

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 111930753 A (TENCENT TECHNOLOGY SHENZHEN CO., LTD.) 13 November 2020 (2020-11-13)<br>claims 1-15, description, paragraphs [0005]-[0009] | 1-16 |
| Y | CN 111651296 A (CHINA PING AN PROPERTY INSURANCE STOCK CO., LTD.) 11 September 2020 (2020-09-11)<br>description, paragraphs [0047]-[0114] and figures 2-4 | 1-16 |
| Y | CN 110933468 A (YULONG COMPUTER TELECOMMUNICATION SCIENTIFIC (SHENZHEN) CO., LTD.) 27 March 2020 (2020-03-27)<br>description, paragraphs [0061]-[0072] | 1-16 |
| A | CN 111125776 A (CHENGDU SEFON SOFTWARE CO., LTD.) 08 May 2020 (2020-05-08)<br>entire document | 1-16 |
| A | CN 110362571 A (ZHILIAN WANYUAN (BEIJING) DIGITAL TECHNOLOGY CO., LTD.) 22 October 2019 (2019-10-22)<br>entire document | 1-16 |
| A | US 2007061832 A1 (SAMSUNG ELECTRONICS CO., LTD.) 15 March 2007 (2007-03-15)<br>entire document | 1-16 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 October 2021** | **27 October 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/112005**

| Patent document cited in search report | | | Publication date (day/month/year) | Patent family member(s) | | | Publication date (day/month/year) |
|---|---|---|---|---|---|---|---|
| CN | 111930753 | A | 13 November 2020 | None | | | |
| CN | 111651296 | A | 11 September 2020 | None | | | |
| CN | 110933468 | A | 27 March 2020 | None | | | |
| CN | 111125776 | A | 08 May 2020 | None | | | |
| CN | 110362571 | A | 22 October 2019 | None | | | |
| US | 2007061832 | A1 | 15 March 2007 | KR | 20070030535 | A | 16 March 2007 |
| | | | | EP | 1763233 | A2 | 14 March 2007 |
| | | | | CN | 1933567 | A | 21 March 2007 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020109674467